# NEUE EUROPÄISCHE PATENTSCHRIFT

(11) **EP 2 853 792 B2**
(45) Veröffentlichungstag und Bekanntmachung des Hinweises auf die Entscheidung über den Einspruch: **04.03.2020**
(45) Hinweis auf die Patenterteilung: 08.03.2017
(21) Anmeldenummer: 13186197.3
(22) Anmeldetag: 26.09.2013
(51) Int. Cl.: F16K 31/10, F16K 11/052, F16K 31/06

(54) **Vorrichtung zur Durchflussregelung eines Fluids**
Device for regulating the flow of a fluid
Dispositif destiné à la régulation du débit d'un fluide

(43) Veröffentlichungstag der Anmeldung: 01.04.2015
(73) Patentinhaber: Asco Numatics GmbH, 75248 Ölbronn-Dürrn (DE)
(72) Erfinder: Vogt, Martin, 75248 Ölbronn (DE); Metternich de Oliveira, Peter, 75433 Maulbronn (DE); Ams, Felix, 75236 Kämpfelbach (DE)
(74) Vertreter: Witte, Weller & Partner Patentanwälte mbB

(56) Entgegenhaltungen:
- EP-A1- 1 026 407
- EP-A1- 1 536 169
- EP-A1- 2 068 056
- EP-A1- 2 400 193
- DE-U1-202010 010 279
- Datenblatt zu Ventil 2871 Stand 2012
- Zeichnung zu Führungsrohr Ventil 2871
- SAP Screenshot zu Dokumentenliste Ventil 2871
- Beispielrechnung zu Ventil 2871 aus 2012
- Eidenstattliche Versicherung von Fr. Dr. Gertrud Eppler
- 3 Rechnungen zum Ventil 2871
- Statusversion "A" des Datenblatts zum Ventil 2871

## Beschreibung

Die vorliegende Erfindung betrifft eine Vorrichtung zur Durchflussregelung eines Fluids, mit einem Ventilgehäuse mit zumindest zwei Ventilanschlüssen, die über eine Ventilkammer fluidisch miteinander verbunden sind, zumindest einem Ventilsitz, der mit der Ventilkammer und einem der Ventilanschlüsse in Fluidverbindung steht, einem Ventilglied, das einen außerhalb der Ventilkammer liegenden Betätigungsabschnitt und einen innerhalb der Ventilkammer liegenden Schließkörper für den zumindest einen Ventilsitz aufweist, und einem Elektromagneten mit einem auf den Betätigungsabschnitt wirkenden Magnetanker.

Eine derartige Vorrichtung ist aus der EP 2 068 056 B1 bekannt.

Die bekannte Vorrichtung weist ein zweiteiliges Ventilgehäuse auf, das aus einem von einem Fluid, also einem flüssigen oder gasförmigen Medium durchströmten unteren Gehäuseteil und einem oberen Gehäuseteil zusammengesetzt ist, an dem eine Betätigungsvorrichtung zur Durchflussregelung des Mediums angeordnet ist.

In dem unteren Gehäuseteil sind eine Ventilkammer und drei Ventilanschlüsse vorgesehen, die über die Ventilkammer miteinander fluidisch verbunden sind. Zwei der drei Ventilanschlüsse sind über einen Ventilsitz fluidisch mit der Ventilkammer verbunden, wobei die beiden Ventilsitze mit ihren Achsen parallel zueinander verlaufen. Die beiden Ventilsitze werden von einem einzigen Ventilglied gesteuert, wobei wechselweise der eine Ventilsitz freigegeben und der andere Ventilsitz geschlossen ist.

Das Ventilglied ist ein Blechstanzteil oder ähnlich hergestelltes Metallteil aus einem zwischen den beiden Gehäuseteilen eingespannten Rahmen und einem kreuzförmigen Träger, der über seine kürzeren Kreuzarme fest mit an dem Rahmen vorgesehenen Stegen verbunden ist, die schwenkbar in dem Ventilgehäuse gelagert sind. Die längeren Kreuzarme tragen an ihrem jeweiligen Ende jeweils ein mit einem der beiden Ventilsitze zusammenwirkendes Dichtelement.

Der Rahmen ist durch eine in sich geschlossene Dichtung, durch die sich die Stege hindurch erstrecken, einerseits reibungsarm gelagert und andererseits fluidisch von dem kreuzförmigen Träger getrennt. Der Rahmen dient als Betätigungsabschnitt des Ventilgliedes und liegt außerhalb der Ventilkammer, während der Träger als Teil des Schließkörpers in der Ventilkammer liegt und mit Medium in Kontakt gelangt. Durch Verschwenken des Rahmens um die Stege bzw. durch Verschwenken der Stege in der Dichtung wird gleichzeitig auch der kreuzförmige Träger geschwenkt.

Das Ventilglied wird über einen Elektromagneten betätigt, der über seinen axial verstellbaren Magnetanker auf das erste Ende des Rahmens einwirkt. Zwischen dem Magnetanker und dem ersten Ende des Rahmens sind eine Ventilschließfeder und ein Druckglied angeordnet, die das erste Ende des Rahmens und damit das dort vorgesehene Dichtelement in Richtung des ersten Ventilsitzes drücken.

Das zweite Ende des Rahmens und somit das dort vorgesehene Dichtelement wird über eine Druckfeder und ein Druckglied in Richtung des zugeordneten zweiten Ventilsitzes gedrückt.

Die durch die Druckfeder ausgeübte Schließkraft ist geringer als die durch die Ventilschließfeder ausgeübte Schließkraft, so dass bei stromlosem Elektromagnet der erste Ventilsitz geschlossen ist.

Wenn der Elektromagnet bestromt, also aktiviert wird, wird der Magnetanker axial so verstellt, dass sich das erste Dichtelement unter der Wirkung der Druckfeder von dem ersten Ventilsitz abheben.

Die bekannte Vorrichtung schafft so ein von einem einzigen Ventilglied gesteuertes Doppelsitzventil mit zwei getrennten Ventileinlässen und einem gemeinsamen Ventilauslass, wobei die Ventileinlässe wechselweise mit dem Ventilauslass verbindbar sind.

Die EP 1 536 169 B1 beschreibt eine weitere Vorrichtung zur Regelung eines flüssigen oder gasförmigen Mediums. Die bekannte Vorrichtung weist ein Ventilgehäuse mit einem Ventileinlass und einem Ventilauslass sowie mit einer zwischen Ventileinlass und Ventilauslass angeordneten Ventilöffnung auf, die von einem Ventilsitz umgeben ist. Ventilöffnung und Ventilsitz sind in einer Ventilkammer angeordnet.

Der Ventilsitz arbeitet zum Öffnen und Schließen der Ventilöffnung mit einem Ventilglied zusammen, das an der ersten Stirnseite eines in die Ventilkammer hineinragenden Ankers eines Elektromagneten befestigt ist. Der Anker ist in einer Ankerhülse axial verschieblich geführt, die ihrerseits in die Ventilkammer eingesetzt und in dieser gegen die Kammerwand abgedichtet ist.

In der Ankerhülse ist oberhalb der zweiten Stirnseite des Ankers ein fester Ankerstopfen angeordnet, in dem ein von außen zugänglicher Justierstift sitzt, der mit einer Ventilschließfeder zusammenwirkt, die in einem Sackloch des Ankers angeordnet ist. Die Ventilschließfeder stützt sich so einerseits an dem Anker und andererseits an dem Justierstift ab. Bei unerregtem Elektromagneten presst die Ventilschließfeder den Anker und über diesen das Ventilglied auf den Ventilsitz auf. Über den Justierstift kann die axiale Vorspannung der Ventilschließfeder und damit der Schließdruck verändert werden, mit dem das Ventilglied auf dem Ventilsitz aufsitzt.

Der Anker ist an seinen beiden Stirnseiten mittels zweier Flachfedern in der Ankerhülse so gelagert, dass er mit minimalem Radialspiel berührungslos in der Ankerhülse einliegt und axial verschiebbar ist, ohne dabei die Innenwand der Ankerhülse zu berühren. Die obere und untere Flachfeder sind mit unterschiedlichem Durchmesser gleichartig ausgebildet und weisen spiralartig verlaufende Aussparungen oder ähnlich federnde Aussparungen auf.

Durch Verstellen des Justierstiftes wird nicht nur die Vorspannung der Ventilschließfeder sondern auch die Vorspannung der oberen Flachfeder verändert. Die Vorspannung der unteren Flachfeder kann durch axiales Verstellen der Ankerhülse verändert werden.

Bei Bestromung des Elektromagneten wird der Anker gegen die Federkraft der Ventilschließfeder axial verschoben, und der Anker hebt das Ventilglied vom Ventilsitz ab, wodurch die Ventilöffnung freigegeben ist und je nach Hub des Ventilglieds eine größere oder kleinere Mediummenge von dem Ventileinlass über die Ventilkammer zu dem Ventilauslass strömt.

Die Ventilkammer ist ständig mit Medium gefüllt, so dass auch das Ventilglied und das Stirnende des Ankers stets vom Medium umspült sind.
Aus der EP 2 400 193 A1 ist eine weitere Vorrichtung zur Durchflussregelung eines flüssigen oder gasförmigen Mediums bekannt, die der Vorrichtung gemäß der EP 1 536 169 B1 grundsätzlich ähnlich gestaltet ist. Die Vorrichtung gemäß der EP 2 400 193 A1 weist ein bewegliches Ventilglied auf, dem ein Dämpfungskörper, vorzugsweise ein viskoelastischer Dämpfungskörper, zugeordnet ist.
Aus der DE 20 2010 010 279 U1 ist ein Ventil mit einem Magnetantrieb und einem darin in einer Axialrichtung bewegbar angeordneten Kern zum Öffnen und Schließen eines Ventilsitzes bekannt, wobei an einem axialen Ende des Kerns zumindest zwei aufeinander gestapelte Flachfedern angeordnet sind.

Obwohl die insoweit beschriebenen Magnetventile sich im Alltagseinsatz bewährt haben, weisen sie insbesondere im Hinblick auf den Einsatz in der Analysen- und Medizintechnik jeweils spezifische Nachteile auf.

Bei der aus der EP 1 536 169 B1 bekannten Vorrichtung ist von Nachteil, dass der axial verschiebliche, metallische Anker konstruktionsbedingt in die Ventilkammer hineinragt, also mit dem Medium in Kontakt gelangt, was in der Analysen- und Medizintechnik nicht akzeptierbar ist.

Bei der aus der EP 2 068 056 B1 bekannten Vorrichtung ist von Nachteil, dass sie keine stufenlose und/oder hysteresefreie Durchflussregelung ermöglicht.

Vor diesem Hintergrund liegt der vorliegenden Erfindung die Aufgabe zugrunde, die bekannte Vorrichtung derart weiterzubilden, dass sie bei konstruktiv einfachem Aufbau die vorstehend erwähnten Nachteile vermeidet.

Erfindungsgemäß wird diese Aufgabe durch eine Vorrichtung zur Durchflussregelung eines Fluids gemäß Anspruch 1 gelöst.

Weil der Magnetanker jetzt von zwei Flachfedern gehalten wird, ist er reibungslos, zumindest reibungsarm aufgehängt, da es keiner weiteren Führung bedarf, um ihn axial ausgerichtet zu halten.

Es war nicht zu erwarten, dass diese filigrane Aufhängung des Magnetankers, wie sie prinzipiell aus der EP 1 536 169 B1 bekannt ist, vorteilhaft auch bei einer Vorrichtung einsetzbar ist, wie sie prinzipiell aus der EP 2 068 056 B1 bekannt ist, die ein Ventilglied aufweist, das reibungsarm über eine Dichtung gelagert ist, die den außerhalb der Ventilkammer liegenden Betätigungsabschnitt des Ventilgliedes von dem innerhalb der Ventilkammer liegenden Schließkörper trennt.

Die Erfinder der vorliegenden Anmeldung haben jedoch erkannt, dass auch mit einem zwischen zwei Flachfedern gelagerten Magnetanker die erforderliche Betätigung für das einen Betätigungsabschnitt und einen Schließkörper aufweisende Ventilglied bewirkt werden kann. Es ist sogar so, dass mit der erfindungsgemäßen Vorrichtung jetzt auch eine kontinuierliche Durchflussregelung für analytische oder medizintechnische Anwendungen möglich ist, bei denen das Medium nicht mit metallischen Teilen wie dem Magnetanker in Kontakt gelangen darf.

Weil sowohl das Ventilglied als auch der Magnetanker reibungslos gelagert sind, ist ferner eine hysteresefreie Durchflussregelung möglich. Das kontinuierliche Öffnen und Schließen des Ventilsitzes ermöglicht jetzt auch bei einem konstruktiv einfach aufgebauten Elektromagnetventil eine genau definierte Durchflusskurve, die in beiden Richtungen ohne Abweichungen durchlaufen werden kann.

Die der Erfindung zugrunde liegende Aufgabe wird auf diese Weise vollkommen gelöst.

Der Magnetanker weist an einer Stirnseite einen zentrischen, sich axial erstreckenden Führungsdorn auf, der sich mit radialem Spiel in einem festen Magnetteil erstreckt, und an dem eine erste der beiden Flachfedern angreift.

Hier ist von Vorteil, dass der Mediumsfluss sich in einem großen Bereich sehr fein regeln lässt, weil die Magnetkraft unabhängig von Hub des Magnetankers ist. Dies ermöglicht eine gut zu definierende und sehr reproduzierbare Durchflusskurve.

Weiter ist es bevorzugt, wenn der Magnetanker an einer Stirnseite einen mit dem Betätigungsabschnitt zusammenwirkenden Zapfen aufweist, an dem eine zweite der beiden Flachfedern angreift.

Diese Maßnahme ist konstruktiv von Vorteil, denn der Magnetanker kann so gut betätigt und im Hub eingestellt werden, weil er zwischen den beiden Flachfedern gelagert ist.

Ferner ist von Vorteil, dass Zapfen und Führungsdorn jeweils zwei Funktionen erfüllen, weil die neue Vorrichtung so einfach aufgebaut und leicht zu montieren ist.

Der Magnetanker ist axial verschieblich in einer Führungshülse des Elektromagneten angeordnet, an der das Magnetteil festgelegt ist, in dem Magnetteil eine zentrische axiale Bohrung vorgesehen ist, in der eine Einstellfeder und eine Justierschraube derart angeordnet sind, dass die Justierschraube die Einstellfeder gegen den Führungsdorn drückt.

Diese Maßnahme ermöglicht auf konstruktive einfache Weise eine Einstellung der Schließkraft bei nicht erregtem Elektromagneten und des Startpunktes der Durchflusskurve.

Das Magnetteil umfasst einen Magnetstopfen und ein damit fest verbundenes Magnetpolstück, wobei in dem Magnetpolstück eine Durchgangsöffnung angeordnet ist, in der sich der Führungsdorn erstreckt, und wobei in dem Magnetpolstück die Bohrung für die Einstellfeder angeordnet ist. Vorzugsweise ist die erste Flachfeder zwischen dem Magnetstopfen und dem Magnetpolstück angeordnet, weiter vorzugsweise ist die erste Flachfeder zwischen dem Magnetstopfen und dem Magnetpolstück eingeklemmt, und schließlich sind Magnetstopfen und Magnetpolstück miteinander verschraubt.

Diese Maßnahmen sind einzeln und insgesamt konstruktiv von Vorteil, denn die Führungshülse lässt sich mit den einzelnen Komponenten als Einheit fertigen und später leicht zu der neuen Vorrichtung montieren.

Weiter ist es bevorzugt, wenn an einem Ende der Führungshülse ein Ringflansch vorgesehen ist, über den die Führungshülse an dem Ventilgehäuse festgelegt ist, und vorzugsweise die untere Flachfeder zwischen dem Ringflansch und dem Ventilgehäuse eingeklemmt ist.

Auch diese Maßnahme ist konstruktiv von Vorteil, weil die Flachfeder beim Zusammenbau gleich mit fixiert wird.

Dabei ist es bevorzugt, wenn in dem Ventilgehäuse eine Aufnahmekammer vorgesehen ist, in die der Zapfen und ein Druckstück für den Betätigungsabschnitt des Ventilgliedes hineinragen, wobei der Ringflansch die Aufnahmekammer umgibt.

Diese Maßnahme ermöglicht eine einfache Montage.

Weiter ist es bevorzugt, wenn in dem Ventilgehäuse ein Führungsschacht vorgesehen ist, in dem ein Druckstück für den Betätigungsabschnitt des Ventilgliedes und eine Rückstellfeder angeordnet ist, die über das Druckstück auf den Betätigungsabschnitt wirkt.

Diese Maßnahme stellt auf konstruktiv einfache Weise sicher, dass das Ventilglied spielfrei bewegt wird, vermeidet also Schalthysteresen.

Dann ist es bevorzugt, wenn die Rückstellfeder von derselben Seite auf den Betätigungsabschnitt wirkt wie der Zapfen.

Diese Maßnahme schafft die Möglichkeit für einen zweiten Ventilsitz, der über das Ventilglied betätigt werden kann, und damit für einen dritten Ventilanschluss.

Am Ventilgehäuse ist ein dritter Ventilanschluss und in dem Ventilgehäuse ist ein zweiter Ventilsitz vorgesehen, der mit der Ventilkammer und dem dritten Ventilanschluss in Fluidverbindung steht und über das Ventilglied betätigt wird.

Diese Maßnahme schafft ein Ventil, das als 3/2 U Ventil mit drei Ventilanschlüssen und zwei Schaltstellungen mit Umsteuerfunktion gestaltet ist.

Allgemein ist es noch bevorzugt, wenn der Betätigungsabschnitt über zwei Stege mit dem Schließkörper verbunden ist, die sich durch eine Dichtung erstrecken, die den Betätigungsabschnitt und den Schließkörper voneinander trennen.

Diese Maßnahme stellt eine reibungsarme Lagerung des Ventilgliedes sicher, trägt also zu der hysterefreien Durchflusskurve bei.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der beigefügten Zeichnung dargestellt und wird in der nachfolgenden Beschreibung näher erläutert. Es zeigen:
- Fig. 1: eine längsgeschnittene Seitenansicht einer Vorrichtung zur Durchflussregelung eines Fluids;
- Fig. 2: eine schematische Explosionsdarstellung der Vorrichtung aus Fig. 1;
- Fig. 3: eine Unteransicht des Ventilgliedes aus Fig. 2; und
- Fig. 4: eine schematische Explosionsdarstellung des in der Vorrichtung aus Fig. 1 und 2 verwendeten Ankers mit Ankerstopfen und Ankerhülse.

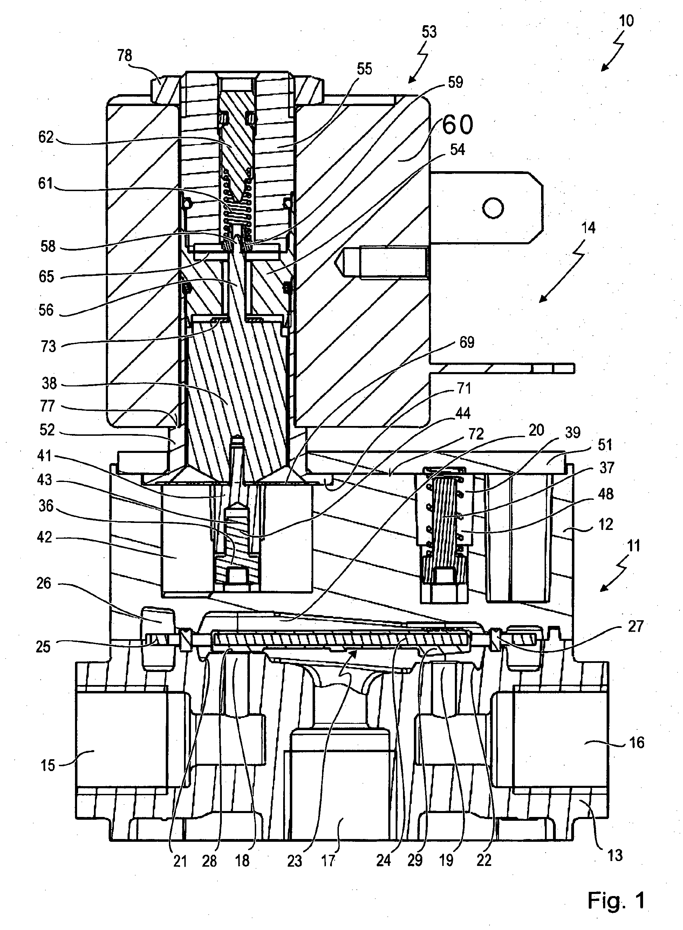

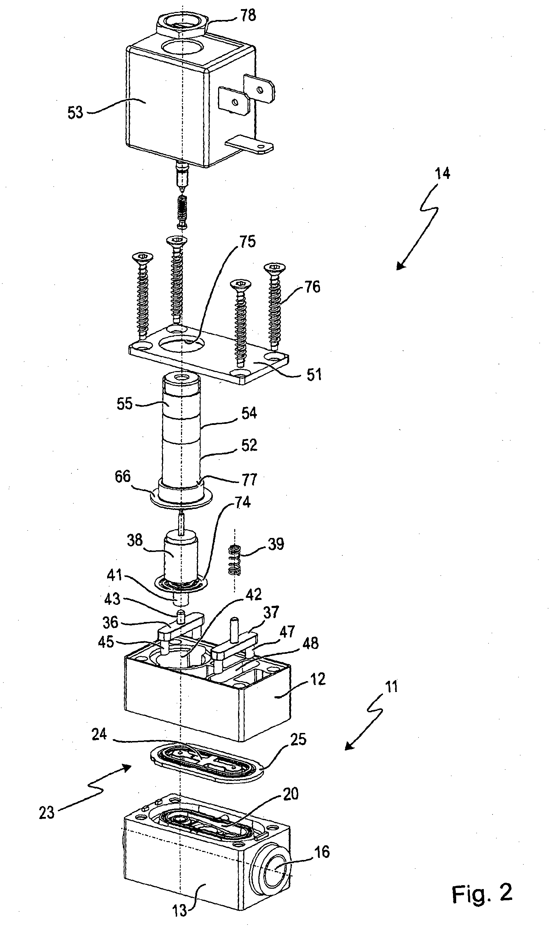

In Fig. 1 und 2 ist eine Vorrichtung 10 zur Durchflussregelung eines fluiden oder fließenden Mediums, z.B. eines flüssigen oder eines gasförmigen Mediums gezeigt, die ein zweiteiliges Ventilgehäuse 11 aufweist, das aus einem oberen Gehäuseteil 12 und einem unteren Gehäuseteil 13 zusammengesetzt ist. Der untere Gehäuseteil 13 ist von dem Medium durchströmt, während an dem oberen Gehäuseteil 12 eine vom Medium getrennte Betätigungsvorrichtung 14 zur Durchflussregelung des Mediums vorgesehen ist.

In dem unteren Gehäuseteil 13 des Ventilgehäuses 11 sind als Ventilanschlüsse an voneinander abgekehrten Seiten zwei Ventilauslässe 15, 16 und ein dazwischen angeordneter Ventileinlass 17 vorgesehen. Zwischen dem Ventilauslass 15 und dem Ventileinlass 17 ist eine erste Ventilöffnung 18 und zwischen dem Ventilauslass 16 und dem Ventileinlass 17 eine zweite Ventilöffnung 19 angeordnet. Die Achsen der beiden Ventilöffnungen 18, 19 sind parallel zueinander ausgerichtet.

Die beiden Ventilöffnungen 18, 19 münden in eine Ventilkammer 20, die an der Schnittstelle zwischen dem oberen Gehäuseteil 12 und dem unteren Gehäuseteil 13 ausgebildet ist, wobei ein oberer Teil der Ventilkammer 20 in dem oberen Gehäuseteil 12 und ein unterer Teil der Ventilkammer 20 in dem unteren Gehäuseteil 13 eingearbeitet ist. Die erste Ventilöffnung 18 ist von einem ersten Ventilsitz 21 und die zweite Ventilöffnung 19 von einem zweiten Ventilsitz 22 jeweils konzentrisch umschlossen.

Die beiden Ventilöffnungen 18, 19 werden von einem einzigen Ventilglied 23 gesteuert, das nur eine der beiden Ventilöffnung 18, 19 zurzeit vollständig verschließen aber auch beide Ventilöffnung teilweise öffnen bzw. schließen kann. Auf diese Weise kann Medium von dem Ventileinlass 17 wahlweise nur zu einem der beiden Ventilauslässe 15, 16 geleitet, kontinuierlich von dem einen auf den anderen Ventilauslass 15, 16 umgesteuert, oder beliebig auf die beiden Ventilauslässe 15, 16 verteilt werden kann.

Das Ventilglied 23 wird dazu von der Betätigungsvorrichtung 14 betätigt, wobei bei inaktiver Betätigungsvorrichtung 14 das Ventilglied 23 die erste Ventilöffnung 18 schließt und die zweite Ventilöffnung 19 freigibt, wie dies in Fig. 1 dargestellt ist.

Das Ventilglied 23 weist einen in der Ventilkammer 20 angeordneten Schließkörper 24, der mit den Ventilsitzen 21, 22 zusammenwirkt, und als Betätigungsabschnitt einen außerhalb der Ventilkammer 20 angeordneten und somit von dem Medium getrennten, den Schließkörper 24 mit Abstand umgebenden Rahmen 25 auf, an dem der Schließkörper 24 fest angeordnet ist. Der Rahmen 25 ist in einem die Ventilkammer 20 umgebenden Hohlraum 26 schwenkbar angeordnet.

Der Hohlraum 26 liegt ebenfalls in der Schnittstelle zwischen den beiden Gehäuseteilen 12, 13, wobei ein oberer Teil des umlaufenden Hohlraums 26 in den oberen Gehäuseteil 12 und ein unterer Teil des Hohlraums 26 in den unteren Gehäuseteil 13 eingearbeitet ist. Die Ventilkammer 20 und der Hohlraum 26 sind durch eine zwischen den beiden Gehäuseteilen 12, 13 festgelegte, geschlossen umlaufende Dichtung 27 hermetisch voneinander getrennt.

An dem Schließkörper 24 sind zwei Dichtelemente 28, 29 angeordnet, die den Ventilsitzen 21 bzw. 22 zugeordnet sind und diese vollständig verschließen, wenn sie ganz auf ihnen aufliegen, und teilweise oder ganz freigeben, je nachdem, wie weit sie von ihnen abgehoben werden.

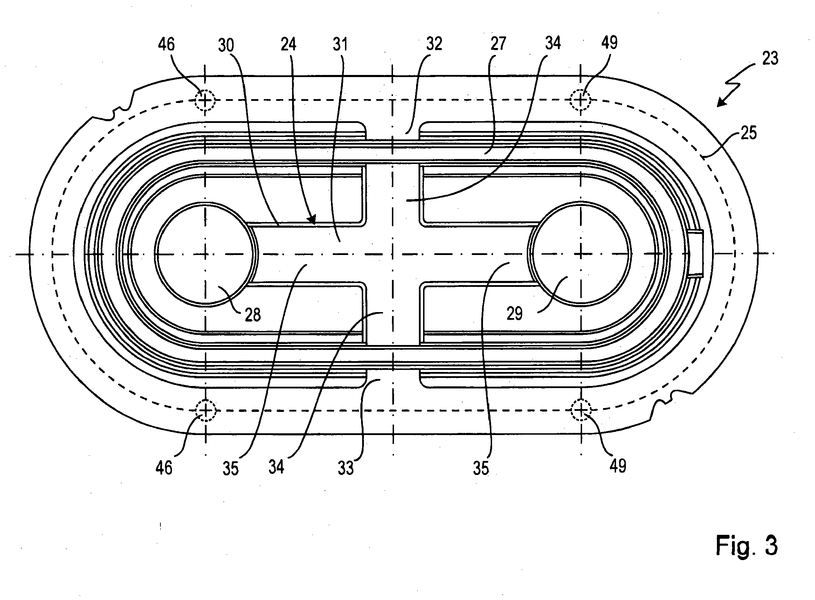

In Fig. 3 ist das Ventilglied 23 in einer Ansicht von unten, also auf die beiden Dichtelemente 28, 29 gesehen gezeigt.

Der Schließkörper 24 weist einen flachen, kreuzförmigen Träger 30 und einen den Träger 30 umhüllenden Überzug 31, z. B. aus Kunststoff, Gummi, einem Elastomer od. dgl., auf. Der Rahmen 25 ist über z. B. zwei mittig am Rahmen 25 einander diametral gegenüberliegende Stege 32, 33 mit den kürzeren Kreuzarmen 34 des Trägers 30 starr verbunden, wobei die Stege 32, 33 die Dichtung 27 quer zu deren Längserstreckung durchdringen und nach Einspannen der Dichtung 27 zwischen die beiden Gehäuseteilen 12, 13 eine reibungsfreie Schwenklagerung für das Ventilglied 23 bilden.

An den Enden der beiden längeren Kreuzarme 35 sind die mit den Ventilsitzen 21, 22 zusammenwirkende Dichtflächen 28, 29 ausgebildet.

Die auf voneinander abgekehrten Seiten der Schwenklagerung des Ventilglieds 23 im gleichen Abstand von dieser zueinander versetzt angeordneten Ventilsitze 21, 22 sind plan ausgebildet und weisen unterschiedliche Lotabstände von der Schwenklagerung auf, wobei der Lotabstand des zweiten Ventilsitzes 22 grösser ist als der des ersten Ventilsitzes 21. Unter Lotabstand wird der Abstand der Ebene, in der der plane Ventilsitz 21 bzw. 22 liegt, von der Schwenklagerung verstanden.

Wie sich aus Fig. 1 ergibt, ist die mit dem ersten Ventilsitz 21 zusammenwirkende Dichtfläche 28 parallel zur Ebene von Rahmen 25 und Träger 30 ausgerichtet, während die Dichtfläche 29, die mit dem in Bezug auf den ersten Ventilsitz 21 zurückversetzten zweiten Ventilsitz 22 zusammenwirkt, spitzwinklig zur Ebene von Rahmen 25 und Träger 30 ausgerichtet ist. Der Anstellwinkel der Dichtfläche 29 entspricht dabei dem Schwenkwinkel, um den das Ventilglied 23 geschwenkt wird, um die zweite Ventilöffnung 19 vollständig zu schließen und die erste Ventilöffnung 18 dann vollständig freizugeben.

Der Rahmen 25, der Träger 30 und die beide miteinander verbindenden Stege 32, 33 sind einteilig als Stanzschnitt aus einem Metallblech hergestellt. Der Überzug 31 wird vorteilhaft durch Umspritzen des Trägers 30 mit z. B. Kunststoff, Gummi, einem Elastomer od. dgl. hergestellt. Beim Umspritzen des Trägers 30 wird gleichzeitig aus dem gleichen Material auch die geschlossen umlaufende Dichtung 27 mit hergestellt, die die sich vom Rahmen 25 zum Träger 30 erstreckenden und mit dem Rahmen 25 und dem Träger 30 einstückig ausgebildeten Stege 32, 31 beidseitig überdeckt.

Der Rahmen 25 - und mit ihm der Schließkörper 24 - wird durch das Zusammenwirken von zwei Druckgabeln 36, 37 verschwenkt, wie sich aus den Fig. 1 und 2 ergibt. Die erste Druckgabel 36 wird über einen Magnetanker 38 und die zweite Druckgabel 37 über eine Rückstellfeder 39 auf den Rahmen 25 gedrückt, um ihn gegensinnig um die durch die Stege 32 und 33 im Zusammenwirken mit der Dichtung 27 gebildete Schwenklagerung zu verschwenken.

Der Magnetanker 38 weist an seiner unteren Stirnseite einen im Durchmesser verringerten Zapfen 41 auf, der in eine im oberen Gehäuseteil 12 ausgebildete Aufnahmekammer 42 eintaucht. Die erste Druckgabel 36 sitzt mit ihrem oberen Schaft 43 in einem axialen Sackloch 44 in dem Zapfen 41 und liegt mit ihren Gabelzinken 45 auf dem Rahmen 25 dort auf, wo in Fig. 3 gestrichelte Kreise 46 zu sehen sind.

Die zweite Druckgabel 37 mit ihren Gabelzinken 47 ist in einem in den oberen Gehäuseteil 12 des Ventilgehäuses 11 eingebrachten Führungsschacht 48 axial verschieblich geführt. Die Gabelzinken 47 der zweiten Druckgabel 37 liegen ebenfalls auf dem Rahmen 25 auf, und zwar an zwei an der zweiten Ventilöffnung 19 einander gegenüberliegenden Stellen 49, und werden von der auf den Schaft der Druckgabel 37 aufgeschobenen Rückstellfeder 39, die sich einerseits an der Druckgabel 37 und andererseits gehäuseseitig abstützt, auf den Rahmen 25 aufgedrückt.

Die beiden Druckgabeln 36, 37 wirken so von derselben Seite auf den Rahmen 25 des Ventilglieds 23.

Die Federkraft der Rückstellfeder 39 ist kleiner bemessen als die Kraft, mit der der Magentanker 38 bei inaktiver Betätigungsvorrichtung 14 auf die erste Druckgabel 36 drückt, so dass die zweite Druckgabel 37 das Ventilglied 23 mit der Dichtfläche 29 auf den zweiten Ventilsitz 22 erst dann aufzudrücken vermag, wenn durch Axialverschiebung des Magnetankers 38 die auf das Ventilschließglied 23 am Ort der ersten Ventilöffnung 18 wirkende Schließkraft aufgehoben ist.

Eine auf die Oberseite des oberen Gehäuseteils 12 aufgesetzte und mit dem Ventilgehäuse 11 verschraubte Abdeckplatte 51 schließt sowohl die Aufnahmekammer 42 unter Festlegung einer den Magnetanker 38 führenden Führungshülse 52 als auch den Führungsschacht 47 der zweiten Druckgabel 37 ab, wobei die auf der Druckgabel 37 aufsitzende Rückstellfeder 39 sich innen an der Abdeckplatte 51 abstützt.

Ist die Betätigungsvorrichtung inaktiv, so nimmt das Ventilglied 23 seine Stellung in Fig. 1 ein, bei welcher die Dichtfläche 28 auf den ersten Ventilsitz 21 der ersten Ventilöffnung 18 aufgepresst ist und die Dichtfläche 29 vom zweiten Ventilsitz 22 an der zweiten Ventilöffnung 19 abgehoben ist. In diesem Fall ist ein Strömungsweg von dem Ventileinlass 17 zu dem Ventilauslass 16 freigegeben und der Strömungsweg von dem Ventileinlass 17 zu dem Ventilauslass 15 gesperrt.

Wird die Betätigungsvorrichtung 14 aktiviert, so verschiebt sich der Magnetanker 38 nach oben. Durch die Federkraft der Rückstellfeder 39 schwenkt die Druckgabel 37 das Ventilglied 23 um die Schwenklagerung an den Stegen 32, 33 und drückt das Ventilglied 23 mit der Dichtfläche 29 auf den zweiten Ventilsitz 22 an der zweiten Ventilöffnung 19 auf. Der Strömungsweg vom Ventileinlass 17 zum Ventilauslass 16 ist gesperrt und der Strömungsweg vom Ventileinlass 17 zum Ventilauslass 15 freigegeben.

Die Betätigungsvorrichtung 14 umfasst einen Elektromagneten 53, der ein Proportionalverhalten aufweist, also zum Erregerstrom proportionale Magnetkräfte entwickelt, und in dem die Führungshülse 52 angeordnet ist. In der Führungshülse 52 ist axial verschieblich der Magnetanker 38 gelagert. Dem Magnetanker 38 axial gegenüberliegend ist ein Magnetpolstück 54 und diesem axial gegenüberliegend ein Magnetstopfen 55 angeordnet, der mit dem Magnetpolstück 54 verschraubt ist. Das Magnetpolstück 54 ist mit einem Abschnitt seiner Längserstreckung axial unverschieblich innerhalb der Führungshülse 52 angeordnet.

Führungshülse 52, Magnetstopfen 55 und Magnetpolstück 54 sind von einer Erregerwicklung oder Magnetspule 60 umschlossen.

Die einander zukehrten Enden von Magnetanker 38 und Magnetpolstück 54 greifen ineinander, wodurch die zwischen Magnetanker 38 und Magnetpolstück 54 wirkende Magnetkraft unabhängig vom Hub des Magnetankers 38 ist.

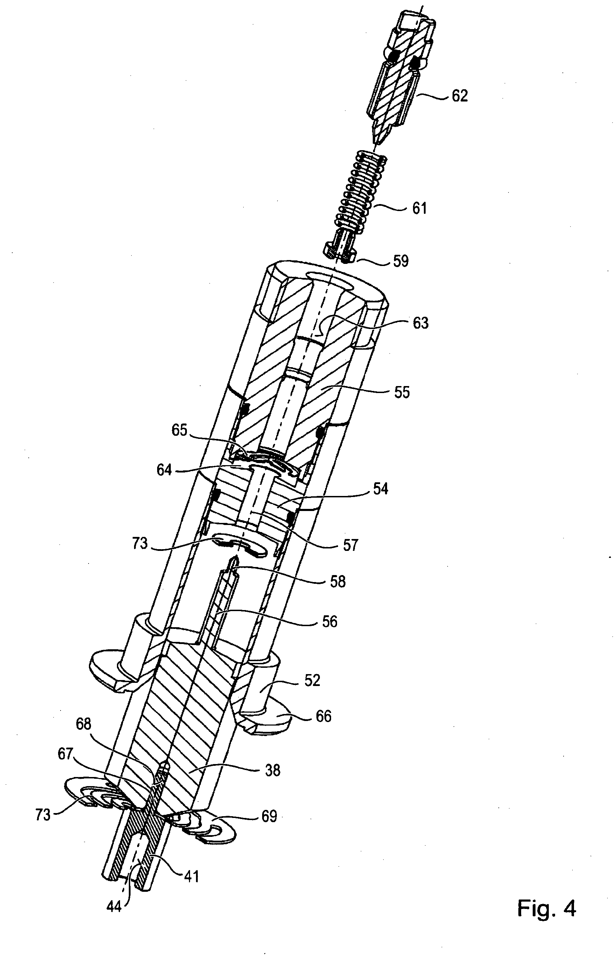

In der Explosionsdarstellung der Fig. 4 ist zu erkennen, dass an dem Magnetanker 38 zentrisch ein sich axial erstreckender Führungsdorn 56 ausgebildet ist, der sich mit radialem Spiel durch eine axiale Durchgangsöffnung 57 in dem Magnetpolstück 54 hindurch erstreckt. An dem Führungsdorn 56 ist stirnseitig eine Spitze 58 ausgebildet, auf der ein Druckstück 59 aufsitzt, auf dem eine Einstellfeder 61 sitzt.

Die Einstellfeder 61 ist unterhalb einer Justierschraube 62 in einer zentrischen, axialen Bohrung 63 in dem Magnetstopfen 55 angeordnet. Die Justierschraube 62 drückt die Einstellfeder 61 gegen den Führungsdorn 56.

Zwischen dem Magnetpolstück 54 und dem Magnetstopfen 55 ist ein kreisförmiger Hohlraum 64 ausgebildet, in dem eine obere Flachfeder 65 angeordnet ist, in die der Führungsdorn 56 des Magnetankers 38 eingreift. Die obere Flachfeder 65 ist zwischen Magnetpolstück 54 und dem Magnetstopfen 55 eingeklemmt.

Die Führungshülse 52 weist an ihrem unteren Ende einen Ringflansch 66 auf, mit dem sie oben auf dem oberen Gehäuseteil 12 aufsitzt und die Aufnahmekammer 42 umgibt. Über den Ringflansch 66 drückt die Abdeckplatte 51 die Führungshülse 52 auf das obere Gehäuseteil 12 und hält so die Betätigungsvorrichtung 14 an dem Ventilgehäuse 11.

Der Zapfen 41 an dem Magnetanker 38 ist als gesondertes Bauteil ausgebildet, das mit einem Schaft 67 in einem stirnseitigen Sackloch 68 in dem Magnetanker 38 sitzt.

Zwischen dem Magnetanker 38 und dem Zapfen 41 ist eine untere Flachfeder 69 angeordnet, die einen größeren Außendurchmesser aufweist als der Magnetanker 38 und in einem kreisförmigen Aufnahmeraum 71 in der Oberseite 72 des oberen Gehäuseteils 12 sitzt, der die Aufnahmekammer 42 umgibt.

In diesem Aufnahmeraum 71 sitzt auch der Ringflansch 66, so dass die untere Flachfeder 69 zwischen dem oberen Gehäuseteil 12 und der Führungshülse 52 eingeklemmt ist.

Auf diese Weise ist der Magnetanker 38 über den Führungsdorn 56 an der oberen Flachfeder 65 und über den Zapfen 41 an der unteren Flachfeder 69 so gelagert, dass er mit minimalem Radialspiel berührungslos in der Führungshülse 52 einliegt und axial verschiebbar ist, ohne dabei die Innenwand der Führungshülse 52 zu berühren.

Bei stromloser Magnetspule 60 drückt die Einstellfeder 61 den Magnetanker 38 auf die Druckgabel 36 und sorgt so dafür, dass das Dichtelement 28 den ersten Ventilsitz 21 verschließt. Die dabei ausgeübte Schließkraft kann durch Verdrehen der Justierschraube 62 verändert werden, indem die Einstellfeder 61 weiter zusammengedrückt oder entspannt wird.

Die obere und untere Flachfeder 65, 69 sind mit unterschiedlichem Durchmesser gleichartig ausgebildet. Jede Flachfeder 65, 69 ist beispielsweise aus Federblech mit einer Materialstärke von 0,05 - 0,3 mm gefertigt und mit einer Zentralöffnung versehen, mit der sie auf dem Führungsdorn 56 bzw. dem Schaft 67 sitzt. Desweiteren sind in der Flachfeder 65 bzw. 69 spiralartig verlaufende Aussparungen 74 mit unterschiedlichem Radialabstand eingearbeitet. Die obere Flachfeder 65 weist einen kleineren Durchmesser als die untere Flachfeder 69 auf.

Zwischen dem Magnetanker 38 und dem Magnetpolstück 54 ist eine Unterlegscheibe 73 angeordnet, die auf dem Führungsdorn 56 sitzt und beim axialen Hochziehen des Magnetankers 38 der Anschlagdämpfung und zur Reduzierung der Einflüsse der Restmagnetisierung dient.

Mit lediglich vier Federelementen, nämlich den beiden Flachfedern 65 und 69, der Einstellfeder 61 und der Rückstellfeder 39 wird die Vorrichtung 10 so eingerichtet, dass eine reibungsfreie und hysteresefreie Durchflussteuerung möglich wird, wobei sowohl die Vorspannkraft auf den Ventilsitz 21 justiert werden kann als auch der Kontakt zwischen Magnetanker 38 und Ventilglied 23 spielfrei gehalten wird. So kann zuverlässig und reproduzierbar der Startpunkt der Durchflusskurve festgelegt werden.

Bei der Montage der neuen Vorrichtung 10 wird zunächst das Ventilglied 23 in das untere Gehäuseteil 13 eingelegt und dann das obere Gehäuseteil 12 aufgesetzt. Dann werden die Druckgabel 36 in die Aufnahmekammer 42 und die Druckgabel 37 mit Rückstellfeder 39 in den Führungsschacht 48 eingelegt.

Danach wird die Einheit aus Führungshülse 52, Magnetstopfen 55, oberer Flachfeder 65, Magentpolstück 54, Magnetanker 38 und unterer Flachfeder 69 mit dem Ringflansch 66 in den Aufnahmeraum 71 eingesetzt.

Schließlich wird die Abdeckplatte 51 auf das obere Gehäuseteil 12 aufgesetzt, wobei die Führungshülse 52 sich durch eine Öffnung 75 in der Abdeckplatte 51 erstreckt. Danach werden die Gehäuseteile 12, 13 und die Abdeckplatte 51 durch Schrauben 76 miteinander verschraubt, wodurch die Führungshülse 52 und die untere Flachfeder 69 auf dem oberen Gehäuseteil 12 festgeklemmt werden.

Danach wird die Magnetspule 60 auf die Führungshülse 52 aufgeschoben und zwischen einer außen an der Führungshülse 52 umlaufenden Schulter 77 und einer auf den Magnetstopfen 55 aufgeschraubten Mutter 78 axial unverschieblich festgelegt ist.

Statt der drei Ventilanschlüsse 15, 16 und 17 kann die neue Vorrichtung 10 auch nur mit zwei Ventilanschlüssen 15 und 17 ausgestattet sein. Der zweite Ventilsitz 23 und das zweite Dichtelement 29 werden dann nicht benötigt. Mit einer so abgewandelten Vorrichtung 10 lässt sich der Mediumsfluss zwischen den Ventilanschlüssen 15 und 17 kontinuierlich und hysteresefrei regeln.

## Patentansprüche

1. Vorrichtung zur Durchflussregelung eines Fluids, mit einem Ventilgehäuse (11) mit drei Ventilanschlüssen (15, 16, 17), die über eine Ventilkammer (20) fluidisch miteinander verbunden sind, zumindest einem Ventilsitz (21, 22), der mit der Ventilkammer (20) und einem (15, 16) der Ventilanschlüsse (15, 16, 17) in Fluidverbindung steht, einem Ventilglied (23), das einen außerhalb der Ventilkammer (20) liegenden Betätigungsabschnitt (25) und einen innerhalb der Ventilkammer (20) liegenden Schließkörper (24) für den zumindest einen Ventilsitz (21, 22) aufweist, und einem Elektromagneten (53) mit einem auf den Betätigungsabschnitt (25) wirkenden Magnetanker (38), wobei die Vorrichtung als Ventil mit drei Ventilanschlüssen (15, 16, 17), zwei Schaltstellungen und Umsteuerfunktion gestaltet ist, **dadurch gekennzeichnet, dass** der Magnetanker (38) über zwei Flachfedern (65, 69) gelagert ist, dass der Magnetanker (38) an einer Stirnseite einen zentrischen, sich axial erstreckenden Führungsdorn (56) aufweist, der sich mit radialem Spiel in einem festen Magnetteil (54, 55) erstreckt, und an dem eine erste (65) der beiden Flachfedern (65, 69) angreift, dass der Magnetanker (38) axial verschieblich in einer Führungshülse (52) des Elektromagneten (53) angeordnet ist, an der das Magnetteil (54, 55) festgelegt ist, wobei in dem Magnetteil (54, 55) eine zentrische axiale Bohrung (63) vorgesehen ist, in der eine Einstellfeder (61) und eine Justierschraube (62) derart angeordnet sind, dass die Justierschraube (62) die Einstellfeder (61) gegen den Führungsdorn (56) drückt, dass das Magnetteil (54, 55) einen Magnetstopfen (55) und ein damit fest verbundenes Magnetpolstück (54) umfasst, dass in dem Magnetpolstück (54) eine Durchgangsöffnung (57) angeordnet ist, in der sich der Führungsdorn (56) erstreckt, und dass in dem Magnetstopfen (55) die Bohrung (63) angeordnet ist.

2. Vorrichtung nach Anspruch 1, **dadurch gekennzeichnet, dass** der Magnetanker (38) an einer Stirnseite einen mit dem Betätigungsabschnitt (25) zusammenwirkenden Zapfen (41) aufweist, an dem eine zweite (69) der beiden Flachfedern (65, 69) angreift.

3. Vorrichtung nach Anspruch 1, **dadurch gekennzeichnet, dass** die erste Flachfeder (65) zwischen dem Magnetstopfen (55) und dem Magnetpolstück (54) angeordnet ist.

4. Vorrichtung nach Anspruch 1 oder 3, **dadurch gekennzeichnet, dass** die erste Flachfeder (65) zwischen dem Magnetstopfen (55) und dem Magnetpolstück (54) eingeklemmt ist.

5. Vorrichtung nach einem der Ansprüche 1, 3 oder 4, **dadurch gekennzeichnet, dass** Magnetstopfen (55) und Magnetpolstück (54) miteinander verschraubt sind.

6. Vorrichtung nach einem der Ansprüche 1 bis 5, **dadurch gekennzeichnet, dass** an einem Ende der Führungshülse (52) ein Ringflansch (66) vorgesehen ist, über den die Führungshülse (52) an dem Ventilgehäuse (11) festgelegt ist.

7. Vorrichtung nach Anspruch 6 wenn abhängig von Anspruch 2, **dadurch gekennzeichnet, dass** die zweite Flachfeder (69) zwischen dem Ringflansch (66) und dem Ventilgehäuse (11) eingeklemmt ist.

8. Vorrichtung nach einem der Ansprüche 6 oder 7 wenn abhängig von Anspruch 2, **dadurch gekennzeichnet, dass** in dem Ventilgehäuse (11) eine Aufnahmekammer (42) vorgesehen ist, in die der Zapfen (41) und ein Druckstück (36) für den Betätigungsabschnitt (25) des Ventilgliedes (23) hineinragen, wobei der Ringflansch (66) die Aufnahmekammer (42) umgibt.

9. Vorrichtung nach einem der Ansprüche 1 bis 8, **dadurch gekennzeichnet, dass** in dem Ventilgehäuse (11) ein Führungsschacht (48) vorgesehen ist, in dem ein Druckstück (37) für der Betätigungsabschnitt (25) des Ventilgliedes (23) und eine Rückstellfeder (39) angeordnet ist, die über das Druckstück (37) auf den Betätigungsabschnitt (25) wirkt.

10. Vorrichtung nach Anspruch 9 wenn abhängig von Anspruch 2, **dadurch gekennzeichnet, dass** die Rückstellfeder (39) von derselben Seite auf den Betätigungsabschnitt (25) wirkt wie der Zapfen (41).

11. Vorrichtung nach einem der Ansprüche 1 bis 10, **dadurch gekennzeichnet, dass** an dem Ventilgehäuse (11) ein dritter Ventilanschluss (16) und in dem Ventilgehäuse (11) ein zweiter Ventilsitz (22) vorgesehen sind, der mit der Ventilkammer (20) und dem dritten Ventilanschluss (16) in Fluidverbindung steht und über das Ventilglied (23) betätigt wird.

12. Vorrichtung nach einem der Ansprüche 1 bis 11, **dadurch gekennzeichnet, dass** der Betätigungsabschnitt (25) über zwei Stege (32, 33) mit dem Schließkörper (24) verbunden ist, die sich durch eine Dichtung (27) erstrecken, die den Betätigungsabschnitt (25) und den Schließkörper (24) voneinander trennen.

## Claims

1. A device for regulating the flow of a fluid, comprising a valve housing (11) having three valve connections (15, 16, 17) that are fluidically connected to one another via a valve chamber (20), at least one valve seat (21, 22) having a fluid connection to the valve chamber (20) and one (15, 16) of the at least two valve connections (15, 16, 17), a valve element (23) with an actuating section (25) located outside of the valve chamber (20) and a closing body (24) located within the valve chamber (20) for the at least one valve seat (21, 22), and an electromagnet (53) having a solenoid armature (38) that acts upon the actuating section (25), wherein the device is arranged as a valve having three valve connections (15, 16, 17), two switch positions, and a changeover function,
**characterized in that** the solenoid armature (38) is supported via two flat springs (65, 69), that the solenoid armature (38) comprises a central, axially extending guiding mandrel (56) on one end face, which extends in a fixed magnet part (54, 55) with radial play, and is engaged by a first (65) of the two flat springs (65, 69), that the solenoid armature (38) is disposed to be axially displaceable in a guide sleeve (52) of the electromagnet (53), on which the magnet part (54, 55) is fixedly mounted, and wherein a central axial bore (63) is provided in the magnet part (54, 55), in which an adjusting spring (61) and an adjusting screw (62) are disposed such that the adjusting screw (62) presses the adjusting spring (61) against the guiding mandrel (56), that the magnet part (54, 55) comprises a magnetic plug (55) and a magnet pole piece (54) fixedly connected thereto, that a passage opening (57) is provided in the magnet pole piece (54), in which the guiding mandrel extends, and that the bore (63) is disposed in the magnetic plug (55).

2. The device according to claim 1, **characterized in that** the solenoid armature (38) comprises, on one end face, a peg (41) that interacts with the actuating section (25) and on which a second (69) of the two flat springs (65, 69) engages.

3. The device according to claim 1, **characterized in that** the first flat spring (65) is disposed between the magnetic plug (55) and the magnet pole piece (54).

4. The device according to claim 1 or 3, **characterized in that** the first flat spring (65) is clamped between the magnetic plug (55) and the magnet pole piece (54).

5. The device according to any of claims 1, 3 or 4, **characterized in that** the magnetic plug (55) and the magnet pole piece (54) are screwed together.

6. The device according to any of claims 1 to 5, **characterized in that** an annular flange (66) is provided at one end of the guide sleeve (52), via which the guide sleeve (52) is fixedly attached to the valve housing (11).

7. The device according to claim 6, as far as dependent on claim 2, **characterized in that** the second flat spring (69) is clamped between the annular flange (66) and the valve housing (11).

8. The device according to any of claims 6 or 7, as far as dependent on claim 2, **characterized in that** a receiving chamber (42) is provided in the valve housing (11), into which the peg (41) and a thrust element (36) for the actuating section (25) of the valve element (23) extend, and wherein the annular flange (66) surrounds the receiving chamber (42).

9. The device according to any of claims 1 to 8, **characterized in that** a guide chute (48) is provided in the valve housing (11), in which a thrust element (37) for the actuating section (25) of the valve element (23) and a return spring (39) are disposed, said return spring (39) acting on the actuating section (25) via the thrust element (37).

10. The device according to claim 9, as far as dependent on claim 2, **characterized in that** the return spring (39) acts on the actuating section (25) from the same side as the peg (41).

11. The device according to any of claims 1 to 10, **characterized in that** a third valve connection (16) is provided on the valve housing (11) and a second valve seat (22) is provided in the valve housing (11), and wherein the second valve seat (22) is fluidically connected to the valve chamber (20) and the third valve connection (16), and is actuated via the valve element (23).

12. The device according to any of claims 1 to 11, **characterized in that** the actuating section (25) is connected to the closing body (24) via two webs (32, 33), which extend through a seal (27), wherein the seal (27) separates the actuating section (25) and the closing body (24) from one another.

## Revendications

1. Ensemble de régulation du débit d'un fluide, l'ensemble présentant un boîtier (11) de soupape doté de trois raccordements (15, 16, 17) de soupape raccordés à écoulement l'un à l'autre par l'intermédiaire d'une chambre (20) de soupape, au moins un siège (21, 22) de soupape qui communique à écoulement avec la chambre (20) de soupape et l'un (15, 16) des raccordements (15, 16, 17) de soupape, un organe (23) de soupape qui présente une section d'actionnement (25) située à l'extérieur de la chambre (20) de soupape et un corps de fermeture (24) pour le ou les sièges (21, 22) de soupape, situé à l'intérieur de la chambre (20) de soupape, et un électroaimant (53) doté d'un induit magnétique (38) qui agit sur la section d'actionnement (25), le dispositif étant configuré sous forme de soupape avec trois raccordements (15, 16, 17) de soupape, deux positions de commutation et une fonction d'inversion,
**caractérisé en ce que** l'induit magnétique (38) est monté par l'intermédiaire de deux ressorts plats (65, 69), **en ce que** sur un côté frontal, l'induit magnétique (38) présente un mandrin central de guidage (56) qui s'étend axialement et avec un jeu radial dans une pièce magnétique fixe (54, 55) et qui est engagé par un premier (65) des deux ressorts plats (65, 69), **en ce que** l'induit magnétique (38) est disposé à coulissement axial dans une douille de guidage (52) de l'électroaimant (53) sur laquelle la pièce magnétique (54, 55) est fixée, dans la pièce magnétique (54, 55) étant prévu un alésage axial (63) centré dans lequel un ressort de réglage (61) et une vis d'ajustement (62) sont disposés de telle sorte que la vis d'ajustement (62) repousse le ressort d'ajustement (61) contre le mandrin de guidage (56), **en ce que** la pièce magnétique (54, 55) comporte un bouchon magnétique (55) et une pièce magnétique polaire (54) reliée solidairement à ce dernier, **en ce qu'**une ouverture de passage (57) dans laquelle s'étend le mandrin de guidage (56) est disposée dans la pièce magnétique polaire (54) et **en ce que** l'alésage (63) est disposé dans le bouchon magnétique (55).

2. Ensemble selon la revendication 1, **caractérisé en ce que** sur un côté frontal, l'induit magnétique (38) présente un tourillon (41) qui coopère avec la section d'actionnement (25) et qui engage le deuxième (69) des deux ressorts plats (65, 69).

3. Ensemble selon la revendication 1, **caractérisé en ce que** le premier ressort plat (65) est disposé entre le bouchon magnétique (55) et la pièce magnétique polaire (54).

4. Ensemble selon les revendications 1 ou 3, **caractérisé en ce que** le premier ressort plat (65) est serré entre le bouchon magnétique (55) et la pièce magnétique polaire (54).

5. Ensemble selon l'une des revendications 1, 3 ou 4, **caractérisé en ce que** le bouchon magnétique (55) et la pièce polaire magnétique (54) sont vissés l'un dans l'autre.

6. Ensemble selon l'une des revendications 1 à 5, **caractérisé en ce qu'**une bride annulaire (66) par l'intermédiaire de laquelle la douille de guidage (52) est fixée sur le boîtier (11) de soupape est prévue à une extrémité de la douille de guidage (52).

7. Ensemble selon la revendication 6 dans la mesure où elle est subordonnée à la revendication 2, **caractérisé en ce que** le deuxième ressort plat (69) est serré entre la bride annulaire (66) et le boîtier (11) de soupape.

8. Ensemble selon l'une des revendications 6 et 7 dans la mesure où elles sont subordonnées à la revendication 2, **caractérisé en ce qu'**une chambre de réception (42) dans laquelle le tourillon (41) et une pièce de poussée (36) de la section d'actionnement (25) de l'organe (23) de soupape pénètrent est prévue dans le boîtier (11) de soupape, la bride annulaire (66) entourant la chambre de réception (42).

9. Ensemble selon l'une des revendications 1 à 8, **caractérisé en ce que** dans le boîtier (11) de soupape est prévu un puits de guidage (48) dans lequel une pièce de poussée (37) de la section d'actionnement (25) de l'organe de soupape (23) et un ressort de rappel (39) sont disposés, le ressort de rappel agissant sur la section d'actionnement (25) par l'intermédiaire de la pièce de poussée (37).

10. Ensemble selon la revendication 9 dans la mesure où elle est subordonnée à la revendication 2, **caractérisé en ce que** le ressort de rappel (39) agit sur le même côté de la section d'actionnement (25) que le tourillon (41).

11. Ensemble selon l'une des revendications 1 à 10, **caractérisé en ce qu'**un troisième raccordement (16) de soupape est prévu sur le boîtier (11) de soupape et un deuxième siège (22) de soupape est prévu dans le boîtier (11) de soupape, communique à écoulement avec la chambre (20) de soupape et le troisième raccordement (16) de soupape et est actionné par l'intermédiaire de l'organe (23) de soupape.

12. Ensemble selon l'une des revendications 1 à 11, **caractérisé en ce que** la section d'actionnement (25) est reliée au corps de fermeture (24) par l'intermédiaire de deux nervures (32, 33) qui s'étendent à travers un joint d'étanchéité (27) qui sépare l'un de l'autre la section d'actionnement (25) et le corps de fermeture (24).
